# EUROPEAN PATENT SPECIFICATION

(11) **EP 0 823 591 B1**
(45) Date of publication and mention of the grant of the patent: **08.01.2003**
(21) Application number: 97305829.0
(22) Date of filing: 01.08.1997
(51) Int. Cl.: F23D 11/38, F23D 11/10, F23D 17/00

(54) **Air atomized discrete jet liquid fuel injector**
Vorrichtung zur Einspritzung von mit Luft zerstäubten Einzelstrahlen aus flüssigem Brennstoff
Dispositif d'injection de jets isolés d'un combustible liquide pulvérisé par air

(30) Priority: 06.08.1996 US 692563
(43) Date of publication of application: 11.02.1998
(73) Proprietor: GENERAL ELECTRIC COMPANY, Schenectady, NY 12345 (US)
(72) Inventor: Sciocchetti, Michael Bruce, Schenectady, New York 12308 (US); Cohen, Mitchell Reuben, Troy, New York 12180 (US); Mick, Warren James, Altamont, New York 12009 (US); Bechtel, William Theodore, II, Scotia, New York 12302 (US)
(74) Representative: Goode, Ian Roy

(56) References cited:
- EP-A- 0 564 184
- GB-A- 878 509
- GB-A- 2 186 507
- US-A- 2 607 193
- US-A- 4 087 050
- US-A- 4 105 163
- US-A- 5 267 692

## Description

The present invention relates to a fuel nozzle construction for use in gas turbine engines and, more specifically, to a liquid fuel injector in a gas turbine combustor providing multiple discrete fuel jets from a single discharge orifice.

A prior art dry low NOx combustor developed for industrial gas turbine applications is described in U.S. Patent No. 5,259,184.

The combustor is a single stage (single combustion chamber or burning zone) duel mode (diffusion and premixed) combustor that operates in a diffusion mode at low turbine loads and in a premixed mode at high turbine loads. Generally, each combustor includes multiple fuel nozzles, each of which has a surrounding dedicated premixing section or tube so that, in the premixed mode, fuel is premixed with air prior to burning in the single combustion chamber. In this way, the multiple dedicated premixing sections or tubes allow thorough premixing of fuel and air prior to burning, which ultimately results in low NOx levels. The vortex breakdown from the swirling flow exiting the premixers, along with the sudden expansion in the liner, are mechanisms for flame stabilization.

Typically, each fuel nozzle assembly includes a rearward supply section with inlets for receiving liquid fuel, atomizing air, diffusion gas fuel and premix gas fuel, and with suitable connecting passages for supplying each of the above-mentioned fluids to a respective passage in a forward delivery section of the fuel nozzle assembly. An exemplary fuel nozzle is described in U.S. Patent No. 5,355,670.

The conventional fuel nozzle arrangement includes structure to swirl the liquid fuel so that the liquid fuel coalesces into an even thin sheet of fuel in the spin chamber prior to being ejected out the discharge orifice. With this arrangement, however, it is difficult to adequately mix the premixer air flow with the liquid fuel prior to burning.

Other examples of atomizing fuel nozzles, which produce various fuel spray patterns in the injected fuel, are described in US-A-4,087,050, GB-A-2,186,507 and GB-A-878,509.

The conventional approach of injecting the finely atomized fuel sheet results in poor fuel penetration into the air stream. The relatively low mass/momentum fuel droplets are immediately diverted downstream when impinged upon by the relatively high velocity/momentum air stream. This results in a fuel-rich combustion zone within the combustor, which leads to non-optimal emissions performance.

In accordance with present invention, there is provided a fuel injector nozzle for a gas turbine combustor for delivering liquid fuel to a discharge orifice. The fuel injector nozzle includes a swirl pilot including a plurality of swirl slots, and a spin chamber disposed downstream of the swirl pilot. The spin chamber is configured to deliver the liquid fuel to the discharge orifice in discrete jets.

The invention also provides a novel fuel nozzle assembly for a gas turbine combustor. The fuel nozzle assembly includes a plurality of inlets for receiving liquid fuel, atomizing air, diffusion gas fuel and premix gas fuel. A forward delivery section receives the liquid fuel, atomizing air, diffusion gas fuel and premix gas fuel via a plurality of connecting passages and includes a fuel injector nozzle for the liquid fuel and a discharge orifice. The fuel injector nozzle includes a swirl pilot including a plurality of swirl slots and a spin chamber disposed downstream of the swirl pilot that is configured to deliver the liquid fuel to the discharge orifice in discrete jets. The spin chamber is preferably sized to deliver the liquid fuel to the discharge orifice in discrete jets.

The structure according to the present invention enables the liquid fuel flowing through the centermost passageway of the fuel nozzle to be discharged as discrete jets as opposed to being discharged after having been coalesced into a sheet. The discrete jet injector liquid fuel streams are concentrated in a fashion to m;n;m;7e atomization until the fuel adequately penetrates the premixer air stream. The energy contained within the air flow is utilized to perform atomization and mixing. The relative sheer forces between the air and fuel is the mechanism that accomplishes atomization.

The invention provides a liquid fuel injector that achieves lower (dry/non-abated) NOx emissions for equivalent overall combustor fuel-to-air ratio; lower diluent (water) injection rate for equivalent NOx emission levels, resulting in a more efficient use of diluent; superior (flatter) exit temperature profile distribution such that heat is not concentrated to the combustor center line, resulting in longer turbine component life; and lower smoke (soot) formation especially at lower fuel flow rates.

These and other aspects of the present invention will become clear in the following description of the invention with reference to the accompanying drawings, in which:
FIGURE 1 is a perspective view of a conventional liquid fuel injector nozzle;
FIGURE 2 is a perspective view of the liquid fuel injector nozzle according to the invention;
FIGURE .3 is a sectional view of the fuel injector nozzle according to the invention; and
FIGURE 4 is an enlarged detail of the discharge or forward end of the nozzle shown in FIGURE 3.

Reference will now be made in detail to the present preferred embodiments of the invention, an example of which is illustrated in the accompanying drawings.

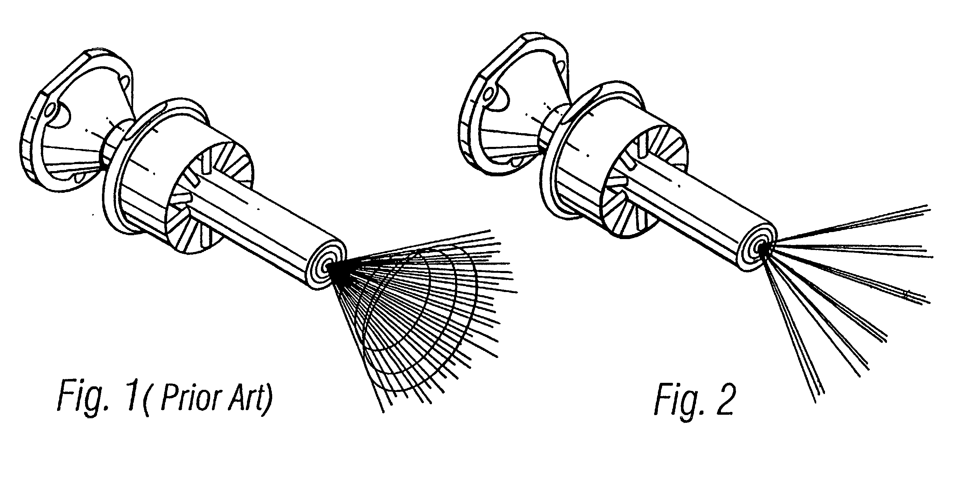

FIGURE 1 illustrates a liquid fuel spray pattern in a conventional liquid fuel injector nozzle. Typically, liquid fuel is introduced into a centermost passageway of the liquid fuel injector nozzle. The liquid fuel is passed through a swirl pilot and into a spin chamber to coalesce the fuel within the spin chamber to an even thin sheet of fuel prior to being ejected through an orifice. As illustrated in FIGURE 1, the conventional liquid fuel injector nozzle introduces a conical spray of fuel into the combustion chamber. In contrast, referring to FIGURE 2, the liquid fuel injector nozzle according to the present invention is configured such that the liquid fuel is injected before the fuel coalesces into a sheet, thereby remaining as discrete jets at discharge into the combustion chamber. The discrete jet injector liquid fuel streams are concentrated in a fashion to minimize atomization until the fuel adequately penetrates the premixer air stream.

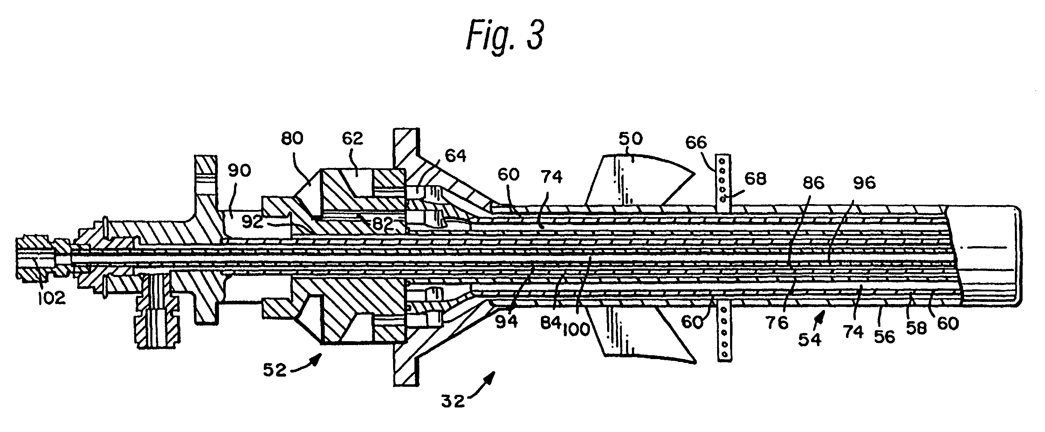

FIGURE 3 is a sectional view of a fuel nozzle assembly including the liquid fuel injector nozzle according to the invention. The fuel nozzle assembly 32 includes a rearward supply section 52 with inlets for receiving liquid fuel, atomizing air, diffusion gas fuel and premix gas fuel, and with suitable connecting passages for supplying each of the above-mentioned fluids to a respective passage in a forward delivery section 54 of the fuel nozzle assembly.

The forward delivery section 54 of the fuel nozzle assembly is comprised of a series of concentric tubes. The two radially outermost concentric tubes 56, 58 provide a premix gas passage 60 that receives premix gas fuel from an inlet 62 connected to the passage 60 by means of a conduit 64. The premix gas passage 60 also communicates with a plurality (for example, eleven) of radial fuel injectors 66, each of which is provided with a plurality of fuel injection ports or holes 68 for discharging gas fuel into a premix zone located within the premix tubes (not shown). The injected fuel mixes with air reverse flowed from the compressor and swirled by means of the annular swirler 50 surrounding the fuel nozzle assembly upstream of the radial injectors 66.

The premix passage 60 is sealed by an O-ring at the forward or discharge end of the fuel nozzle assembly, so that premix fuel may exit only via the radial fuel injectors 66.

The next adjacent passage 74 is formed between concentric tubes 58 and 76 and supplies diffusion gas to the burning zone of the combustor via an orifice at the forwardmost end of the fuel nozzle assembly 32. The forwardmost or discharge end of the nozzle is located within the combustor premix tubes, but relatively close to the forward end thereof. The diffusion gas passage 74 receives diffusion gas from an inlet 80 via conduit 82.

A third passage 84 is defined between concentric tubes 76 and 86 and supplies air to the burning zone via an orifice where it then mixes with diffusion fuel exiting the orifice communicating with passage 74. The atomizing air is supplied to passage 84 from an inlet 90 via conduit 92.

The fuel nozzle assembly 32 is also provided with a further passage 94 for (optionally) supplying water to the burning zone to effect NOx reductions in a manner understood by those skilled in the art. The water passage 94 is defined between the tube 86 and the adjacent concentric tube 96. Water exits the nozzle via an orifice, radially inward of the atomizing air orifice.

Tube 96, the innermost of the series of concentric tubes forming the fuel injector nozzle, itself forms a central passage 100 for liquid fuel which enters the passage by means of an inlet 102. The liquid fuel exits the nozzle by means of a discharge orifice 104 in the center of the nozzle.

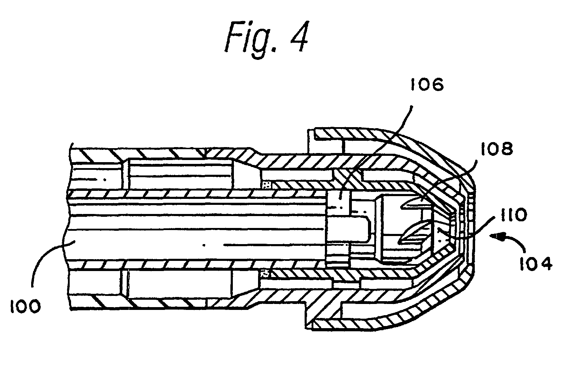

Referring to FIGURE 4, the fuel central passage 100 terminates at a swirl pilot 106 including a plurality of tangentially oriented swirl slots 108. The swirl slots 108 in the swirl pilot 106 impart a swirling motion to the liquid fuel. The swirling liquid fuel enters a spin chamber 110, which is configured such that the fuel proceeds out of the discharge orifice 104 prior to coalescing into a sheet, thereby remaining as discrete jets at the point of discharge. In a preferred arrangement, the spin chamber 110 is reduced in size so that the swirling fuel has insufficient space to coalesce into a sheet. That is, a conventional spin chamber requires a depth of about 2.41mm (0.095") to enable the fuel to coalesce into a sheet; whereas in accordance with one preferred arrangement of the invention, the spin chamber is provided with a depth of about 1.02mm (0.040"), which enables the fuel to be discharged in discrete jets.

In alternative arrangements, the spin chamber may be configured with jet orifices to produce the discrete fuel jets. Of course, those of ordinary skill in the art may contemplate alternative configurations to produce the discrete fuel jets.

The liquid fuel injector nozzle according to the present invention provides superior liquid fuel-to-air mixing within a premix-type combustor and accomplishes superior emissions performance over comparable diffusion-style combustors. The greater relative momentum of the discrete fuel jets over equivalent flow rate conical spray pattern allows deeper penetration and superior mixing with premixer air stream flow.

## Claims

1. A fuel injector nozzle for a gas turbine combustor for delivering liquid fuel to a discharge orifice (104), the fuel injector nozzle comprising:
a swirl pilot (106) including a plurality of swirl slots (108); and
a spin chamber (110) disposed downstream of said swirl pilot **characterised in that**
said spin chamber is configured to deliver the liquid fuel to the discharge orifice in discrete jets.

2. A fuel nozzle assembly (32) for a gas turbine combustor, comprising:
a plurality of inlets for receiving liquid fuel, atomizing air, diffusion gas fuel and premix gas fuel; and
a forward delivery section (54) receiving the liquid fuel, atomizing air, diffusion gas fuel and premix gas fuel via a plurality of connecting passages (110,84,74,60), said forward delivery section comprising a fuel injector nozzle for the liquid fuel and a discharge orifice, said fuel injector nozzle being in accordance with claim 1.

3. A fuel nozzle assembly according to claim 2, wherein said spin chamber (110) is sized to deliver the liquid fuel to said discharge orifice (104) in discrete jets.

## Patentansprüche

1. Brennstoffeinspritzdüse für einen Gasturbinenbrenner
zur Lieferung von flüssigem Brennstoff an eine Ausgangsöffnung (104), wobei die Brennstoffeinspritzdüse enthält:
eine Verwirbelungsspitze (106) mit mehreren Verwirbelungsschlitzen (108) und
eine Drehkammer (110), die stromabwärts von der Verwirbelungsspitze angrenordnet ist,
**dadurch gekennzeichnet, daß** die Drehkammer so geformt ist, daß der flüssige Brennstoff der Ausgangsöffnung in diskreten Strahlen zugeführt wird.

2. Brennstoffdüseneinrichtung (32) für einen Gasturbinenbrenner, enthaltend:
mehrere Einlässe zum Empfangen von flüssigem Brennstoff, Zerstäubungsluft, gasförmigem Verteilungssbrennstoff und gasförmigem Vormischbrennstoff und
einen vorderen Versorgungsabschnitt (54) zum Empfangen des flüssigen Brennstoffes, der Zerstäubungsluft, des gasförmigen Verteilungssbrennstoffes und des gasförmigen Vormischbrennstoffes über mehrere Verbindungskanäle (110,84,74,60), wobei der vordere Versorgungsabschnitt eine Brenstoffeinspritzdüse für den flüssigen Brennstoff und eine Ausgangsöffnung aufweist, wobei die Brennstoffeinspritzdüse gemäß Anspruch 1 aufgebaut ist.

3. Brennstoffdüseneinrichtung nach Anspruch 2, wobei die Drehkammer (110) so bemessen ist, daß sie den flüssigen Brennstoff des Ausgangsöffnung (104) in diskreten Strahlen zuführt.

## Revendications

1. Buse d'injecteur de combustible pour un dispositif de combustion de turbine à gaz pour délivrer du combustible liquide à un orifice d'éjection (104), la buse d'injecteur de combustible comprenant :
un guide atomiseur (106) comprenant une pluralité de fentes d'atomiseur (108) ; et
une chambre de mise en rotation (110) placée en aval dudit guide atomiseur
**caractérisée en ce que**
ladite chambre de mise en rotation est configurée pour délivrer le combustible liquide à l'orifice d'éjection en jets discrets.

2. Ensemble (32) formant buse à combustible pour un dispositif de combustion de turbine à gaz, comprenant :
une pluralité d'orifices d'entrée pour recevoir du combustible liquide, de l'air d'atomisation, du combustible gazeux de diffusion et du combustible gazeux de prémélange ; et
une section de débit avant (54) recevant le combustible liquide, l'air d'atomisation, le combustible gazeux de diffusion et le combustible gazeux de prémélange via une pluralité de passages de connexion (110, 84, 74, 60), ladite section de débit avant comprenant une buse d'injecteur de combustible pour le combustible liquide et un orifice d'éjection, ladite buse d'injecteur de combustible étant conforme à la revendication 1.

3. Ensemble formant buse à combustible selon la revendication 2, dans lequel ladite chambre de mise en rotation (110) est dimensionnée pour délivrer le combustible liquide audit orifice d'éjection (104) en jets discrets.
